# EUROPÄISCHE PATENTSCHRIFT

(11) **EP 1 021 360 B1**
(45) Veröffentlichungstag und Bekanntmachung des Hinweises auf die Patenterteilung: **09.01.2002**
(21) Anmeldenummer: 98951498.9
(22) Anmeldetag: 06.10.1998
(51) Int. Cl.: B65G 1/137

(54) **ANORDNUNG FÜR DIE KOMMISSIONIERUNG VON ARTIKELN**
ARRANGEMENT FOR THE COMMISSIONING OF ARTICLES
CONFIGURATION DE CONSIGNATION D'ARTICLES

(30) Priorität: 06.10.1997 DE 19744058
(43) Veröffentlichungstag der Anmeldung: 26.07.2000
(73) Patentinhaber: Quelle Aktiengesellschaft, 90762 Fürth (DE)
(72) Erfinder: Christ, Ferdinand, 91575 Windsbach (DE)
(74) Vertreter: Matschkur, Lindner Blaumeier Patent- und Rechtsanwälte
(86) Internationale Anmeldenummer: EP9806358
(87) Internationale Veröffentlichungsnummer: WO9918015

(56) Entgegenhaltungen:
- EP-A- 0 457 158
- EP-A- 0 559 604
- DE-A- 3 224 348
- DE-A- 19 622 482
- US-A- 5 411 151

## Beschreibung

Die Erfindung betrifft eine Anordnung für die Kommissionierung von Artikeln.

Insbesondere im Versandhandel, vor allem im Großversandhandel, sind kundenspezifische Bestell-Kommissionen aus einem u. U. sehr umfangreichen Vorrat an verschiedenen Artikeln zusammenzustellen. In der Praxis werden mittels Handarbeit aus ortsfesten Regalen, die Artikel gleicher Art aufnehmen, diese entsprechend der jeweiligen Bestell-Kommission entnommen und auf einen umlaufenden regalartigen Behälter abgelegt, der jeweils einer bestimmten Kommission zugeordnet ist. Nach Fertigstellung und Prüfung der Kommission erfolgt eine Verpackung von Hand und ein anschließender Versand. Die ortsfesten Regale für die Artikel müssen auf ihren Bestand überprüft werden und müssen nachgefüllt werden. Zu diesem Zweck werden die Artikel von einem angelieferten und in einem Wareneingang überprüften Gebinde vereinzelt und über ein Fördersystem zu den Regalen gebracht und dort von Hand umgelagert. Diese Vorgehensweise ist nicht nur umständlich und zeit- sowie platzraubend, sondern auch fehlerbehaftet. Durch die Handarbeit können falsche Artikel entnommen werden oder können falsche Artikel in eines der ortsfesten Regale abgelegt werden. Insbesondere kann es vorkommen, daß das Nachfüllen von Regalen übersehen wird und die gleichwohl über die Fördereinrichtung zugeführten Artikel zu einem Überlauf weitergeleitet werden, in dem sie verbleiben, bis, ebenfalls von Hand, der Überlauf aufgelöst wird. Da das ortsfeste Regal weiterhin einen Mangel an dem jeweiligen Artikel hat, kann dies dazu führen, daß weitere Artikel am Wareneingang bzw. einem diesem zugeordneten Regallager abgefordert werden und gegebenenfalls sogar eine entsprechende Nachbestellung aufgegeben wird, obgleich eine ausreichende Menge an Artikeln an sich vorhanden ist. Die in der Praxis durchgeführte Vorgehensweise ist daher auch aus wirtschaftlichen Gründen nachteilig. Aus wirtschaftlichen Gründen ist es nämlich erwünscht, die Verweildauer von dem Versandhandelsunternehmen zugeführten Artikeln bis zu deren kundenspezifischer Abgabe als Kommission möglichst kurzzuhalten und trotzdem alle ankommenden kundenspezifischen Bestell-Kommissionen so schnell wie möglich und vollständig erledigen zu können. Hier ist ein 24-Stunden-Service erwünscht.

Als erster Schritt hierzu sind rechnergesteuerte automatische Kommssionieranlagen angegeben worden. Eine solche ist beispielsweise in der EP-OS 183 074 angegeben. Diese bekannte Kommissionieranlage weist in Zeilen und Spalten angeordnete schachtartige von einem Zulaufende zu einem Auslaufende geneigte Vorratsbehälter auf. Am Auslaufende ist eine Abgabevorrichtung mit Zähleinrichtung vorgesehen. Die verschiedenen Vorratsbehälter werden mit den jeweiligen in den Vorratsbehältern zwischenzuspeichernden Artikeln von Hand nachgefüllt, insbesondere dann, wenn durch eine Alarmanzeige das Unterschreiten eines Mindestinhalts angezeigt ist. Ein Rechner steuert die Abgabevorrichtung jedes Vorratsbehälters abhängig von dem Vorliegen eines bestimmten kundenspezifischen Kommssionsauftrages so an, daß zu einem vorgegebenen Zeitpunkt vom Auslaufende einer oder mehrere der Artikel auf eine Ausgangsfördereinrichtung wie ein Förderband abgegeben wird/werden. Die Abgabe erfolgt zu einem vom Rechner bestimmten Zeitpunkt derart, daß die unterschiedlichen Artikel einer Kommission zu einem Haufen zusammengestellt am Ausgangsende dieser Ausgangsfördereinrichtung auftreten und entsprechend verpackt werden können. Beim Verpacken ist eine Prüfung auf Vollständigkeit erforderlich, da nicht sichergestellt ist, daß die jeweiligen Vorratsbehälter auch tatsächlich nachgefüllt worden sind. Ferner können die bereits geschilderten Nachteile bei der Versorgung eines solchen Kommissionsierautomaten auftreten. Diese Nachteile treten auch dann auf, wenn der Rechner nicht nur am jeweiligen Vorratsbehälter ein Alarmsignal abgibt, sondern auch an eine die Artikel zuliefernde Einrichtung.

Es besteht daher der Wunsch nach einer möglichst automatisierten Vorgehensweise.

Dabei ist zu berücksichtigen, daß viele Artikel von einem Lieferanten nur in Form von Gebinden oder Großgebinden angeliefert werden. Ferner ist zu berücksichtigen, daß zwar eine Reihe der Artikel sehr häufig angefordert wird, daß es jedoch wiederum eine Reihe von Artikeln gibt, die äußerst selten angefordert werden, wobei sich dies im Laufe der Zeit, z. B. aus saisonalen Gründen ändern kann.

Wie beispielsweise in EP 0 457 158-B1 erläutert, ist es bekannt, Kommissionen aus Artikeln unterschiedlicher Art, Größe und Preis nach Wunsch eines Kunden zusammenzustellen, zu verpacken und zu versenden. Eine Kommissioniervorrichtung ist dabei nach Art eines Schachtlagers oder Durchlauflagers aufgebaut, wobei die einzelnen Schächte bzw. Durchlaufregale eingangsseitig Artikel unterschiedlichster Art, jeweils eine Art pro Schacht oder Durchlaufregal, zugeführt erhalten, wobei ausgangsseitig entsprechend einer Kundenbestellung nur bestimmte gewünschte Artikel einem Abförderband einer Palette, einer Kiste oder dergleichen zugeführt werden. Nach herkömmlichem Stand der Technik werden die Artikel händisch in die einzelnen Schächte bzw. Durchlaufregallagerabschnitte zugeführt. Die genannte Druckschrift schlägt auch eine automatische Zufuhr von den jeweiligen Artikeln zu den Schächten bzw. Durchlaufregalen vor. Um zu erreichen, daß zu jedem gewünschten Zeitpunkt ausreichende Mengen an Artikeln in den Schächten bzw. Durchlaufregalen vorhanden sind, ist es zweckmäßig, einen Rechner vorzusehen, der abhängig von den Kundenbestellungen und der Ist-Menge der Artikel in der Kommissioniervorrichtung gesteuert für den Nachschub sorgt.

Gemäß weiterem Stand der Technik werden Gebinde solcher Artikel von einem Hersteller oder Vertreiber dem Wareneingang eines Versandhandels oder dergleichen zugeliefert. Nach der Wareneingangsprüfung erfolgt eine Vereinzelung der Artikel aus dem Gebinde und werden dann die vereinzelten Artikel der Kommissioniervorrichtung rechnergesteuert zugeführt. Abhängig von den Kundenbestellungen und der Ist-Anzahl der Artikel kann der Rechner auch Nachbestellungen vornehmen.

Da jedoch einerseits die Lieferzeiten der Zulieferer nicht beliebig klein sind und zum anderen die Artikel unterschiedlich oft von Kunden bestellt werden, ist es ebenfalls bekannt, ein Lager vorzusehen, daß zum Speichern der vereinzelten Artikel dient. Meist handelt es sich dabei um ein Hochregallager. Bei Bedarf kann dann aus dem Hochregallager, von dem Rechner gesteuert, eine notwendige Menge der Artikel abgerufen und der Kommissioniervorrichtung in herkömmlicher Weise zugeführt werden. Dies kann händisch erfolgen, kann jedoch auch automatisch erfolgen.

Sowohl für solche Lager als auch für die vorerwähnten Kommissioniervorrichtungen haben sich unterschiedliche Bautypen entwickelt. Es ist ferner üblich, daß das Lager und die Kommissioniervorrichtung voneinander ortsunabhängig, meist über nicht unerhebliche Strecken voneinander getrennt anzuordnen.

Es ist bereits vorgeschlagen worden, beim Kommissionieren nicht auf eine Pallette oder in eine Wanne zu kommissionieren, sondern direkt in den Versandkarton zu kommissionieren, der entsprechend der jeweiligen Kundenbestellung in seiner Größe nach rechnergesteuert ausgewählt und automatisch aufgerichtet wird (Deutsche Patentanmeldungen 196 10 594.3 und 196 22 482.9). Schließlich ist es bekannt, den gefüllten Versandkartons noch Werbematerial, Packmaterial, Versandpapiere, Kostenrechnungen oder dergleichen beizufügen, die Kartons automatisch zu verschließen und zu etikettieren und dem Weiterversand zuzuführen.

Letzteres wird häufig händisch vorgenommen, kann jedoch auch automatisch erfolgen und erfolgt örtlich getrennt von der Kommissionierung.

Aus EP-A-0 559 604 ist eine Lageranordnung beschrieben, welche aus einem Hauptlager und einem Kommissionierlager besteht, die eng benachbart zueinander angeordnet sind. Im Kommissionierlager ist zusätzlich eine Kornmissioniervorrichtung vorgesehen. Zwischen den Lagerbereichen fährt ein Regalbediengerät.

Mit diesem ist es jedoch lediglich möglich, ganze Paletten zu bewegen. Das Regalbediengerät ist nicht zum Entnehmen und Transportieren vereinzelter, im Lager befindlicher Artikel sowie zum Übergeben derselben an die Kommissioniervorrichtung ausgebildet. Darüber hinaus ist bei dem vorbekannten System zwingend eine Einlagerung eingehender Waren in das Hauptlager vorgesehen, das heißt, diese Neuwaren müssen auf jeden Fall zunächst in das Hauptlager verbracht werden.

Demgegenüber ist es Aufgabe der Erfindung, eine Anordnung anzugeben, bei der eine möglichst automatische und schnelle vollständige Kommissionierung möglich ist.

Die Aufgabe wird durch die Merkmale des Anspruchs 1 gelöst. Die Erfindung wird durch die Merkmale der Unteransprüche weitergebildet.

Der Grundgedanke der Erfindung liegt darin, das Lager und die Kommissioniervorrichtung örtlich so eng zueinander benachbart anzuordnen, daß ein einziges Bediengerät sowohl das Einlagern in das Lager als auch das Entnehmen aus dem Lager und das Versorgen der Kommissioniervorrichtung erlaubt, wobei darüberhinaus auch direkt vereinzelte Artikel vom Wareneingang her der Kommissioniervorrichtung zugeordnet werden können. Zweckmäßig ist dabei eine Übereinanderanordnung derart, daß ein Regalbediengerät grundsätzlich bekannter Bauart verwendet werden kann. Von weiterem Vorteil ist dann auch die räumlich eng benachbarte Zuordnung der Verpackung, der Verschließung, der Etikettierung, usw., wobei letzteres gemeinsam für mehrere Anordnungen aus Lager, Kommissioniervorrichtung und gemeinsamem Bediengerät vorgesehen sein kann.

Da es in einfacher Weise möglich ist, einen gemeinsamen zentralen Rechner (Host-Rechner) mit allen Ist-Informationen über den Inhalt des Lagers und der Kommissioniervorrichtung, den Bestellungen für Nachlieferungen, aber auch den Bestellungen der Kunden zwecks Zusammenstellung von Kommissionen zu versorgen, ist es möglich, einen weitestgehend personalfreien vollautomatischen Betrieb zu erreichen, derart, daß nahezu alle Bestellungen von Kunden innerhalb kürzester Zeit erfüllt werden können, wobei dieser Rechner auch Nachbestellungen an die Lieferanten abgeben kann. Der Rechner kann auch so programmiert sein, daß er aus der Art und Weise des Eintreffens von Kundenbestellungen erkennen kann, welche Artikel große Nachfrage haben, so daß er hier rechtzeitig Nachlieferungen veranlassen kann. Aufgrund der vorliegenden Daten kann der Rechner auch entscheiden, ob vom Wareneingang zugeführte Waren direkt der Kommissioniervorrichtung zugeführt werden oder im Lager gespeichert werden. Er kann auch abhängig von den Waren entscheiden, bei welchen Waren es zweckmäßig ist, die Speicherung im Lager vorzuziehen und im Lager gespeicherte Artikel der Kommissioniervorrichtung zuzuführen, statt das Lager zu umfahren. Dabei ist es zweckmäßig den einzelnen Bauteilen eigene mit dem Host-Rechner verbundene und von diesen getrennte, im übrigen aber unabhängige, Kleinrechner (slave-Rechner) zuzuordnen.

Die Erfindung wird anhand der in der Zeichnung schematisch dargestellten Ausführungsbeispiele näher erläutert. Es zeigen:
- Fig. 1: schematisch die Bausteine der erfindungsgemäßen Anordnung;
- Fig. 2: eine erste Anordnung zur Erläuterung der Erfindung;
- Fig. 3: eine zweite Anordnung gemäß der Erfindung;
- Fig. 4: eine dritte Anordnung gemäß der Erfindung.

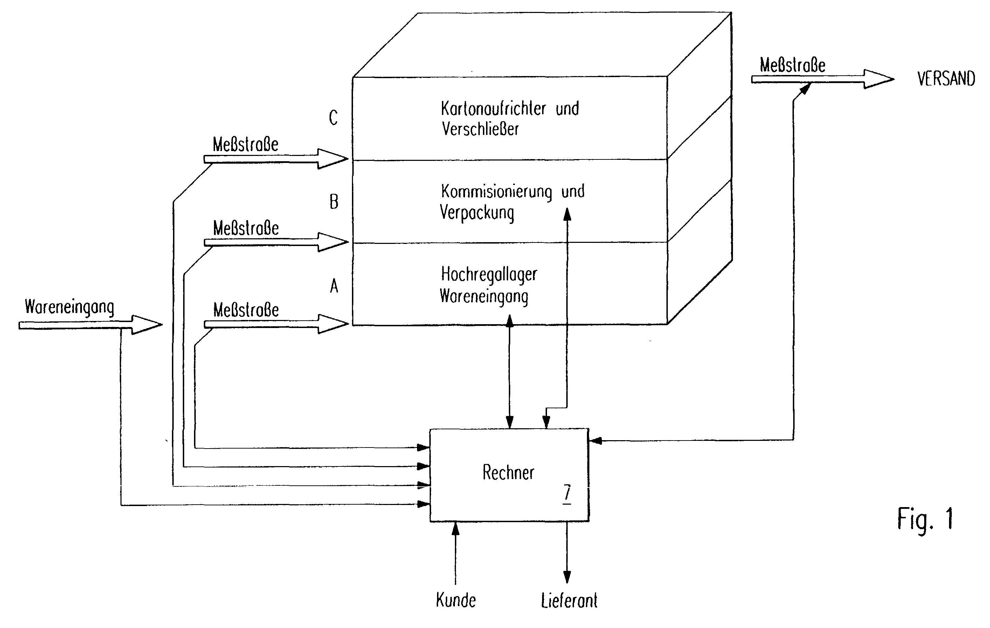

Die wesentlichen Bauteile im Versandhandel werden anhand Fig. 1 näher erläutert.

Einem Wareneingang werden von Zulieferern Gebinde von Artikeln zugeführt, dort einer üblichen Wahleingangsprüfung unterzogen und vereinzelt. In einer Meßstraße werden die für die Individualisierung und Identifizierung des jeweiligen Artikels notwendigen Daten erfaßt. Die Artikel werden dann einem Hochregallager A zugeführt und in dieses eingespeichert.

Ferner ist eine Kommissioniervorrichtung B, beispielsweise vom Schacht-Typ oder vom Durchlaufregallager-Typ, vorgesehen. Dieser sind Bediengeräte zugeordnet, mittels denen einerseits die Schächte beziehungsweise Durchlaufregalabschnitte mit einzelnen Artikeln versorgt werden können, und mittels denen andererseits aus den Schächten bzw. Durchlaufregallagerabschnitten entsprechend einer Kundenbestellung einzelne Artikel jeweils zu einem bestimmten Zeitpunkt und in bestimmter Anzahl entnommen werden können, um sie zu einer Kommission zusammenzustellen. Die zusammengestellte Kommission ist dann zu verpacken, insbesondere in einen Karton einzufüllen. Unter Meßstraße sind dabei diejenigen Erfassungselemente zu verstehen, mittels denen erfaßt wird, welche Artikel zugeführt und welche Artikel entnommen werden. Die Artikel werden also identifiziert. Der zugehörige Rechner veranlaßt das Nachfüllen der Schächte bzw. Durchlaufregalabschnitte der Kommissioniervorrichtung bzw. die zeit- und anzahlgerechte Entnahme der Artikel entsprechend einer Kundenbestellung.

Im Ergänzungsabschnitt C werden die in Kartone gefüllten Kommissionen der Nachbearbeitung zugeführt. Dies ist beispielsweise das Einfüllen von Verpackungsmaterial, von Werbungsunterlagen, von Rechnung sabschnitten und dergleichen, das Verschließen des Kartons sowie das Erreichen der Versandfertigkeit. Ferner kann dort auch das Aufrichten der Versandkartons erfolgen. Falls die Kommissionierung auf Paletten oder in Wannen erfolgt, kann dort dann das Umfüllen in die Kartons erfolgen. Gegebenenfalls kann auch eine direkte Kommissionierung in Kartons erfolgen: Dann werden die aufgerichteten Kartons der Kommissioniervorrichtung zugeführt. Die dem Ergänzungsabschnitt C zugeordnete Meßstraße umfaßt dabei die Erfassungsgeräte für die Erfassung des Zustandes der Verpackung der Kommission, der örtlichen Lage der Kommission vor dem Versand, usw., sowie die Übermittlung entsprechender Daten zum Rechner. Die schließlich nachgeordnete Meßstraße gibt entsprechende Meldungen an den Rechner, daß die Kundenbestellung oder Kommission vollständig abgewickelt ist. In diesen Meßstrassen erfolgt also ebenfalls eine Identifizierung, damit der Rechner richtig zuordnen kann.

Ein typisches Erfassungselement der Meßstrassen ist ein Bar-Code-Leser, der auf den Artikeln, Kartonzuschnitten etc. aufgedruckte (direkt aufgedruckt oder auf ausgeklebten Etiketten aufdruckt) Bar-Codes lesen und so die Idenfifizierung erreichen kann.

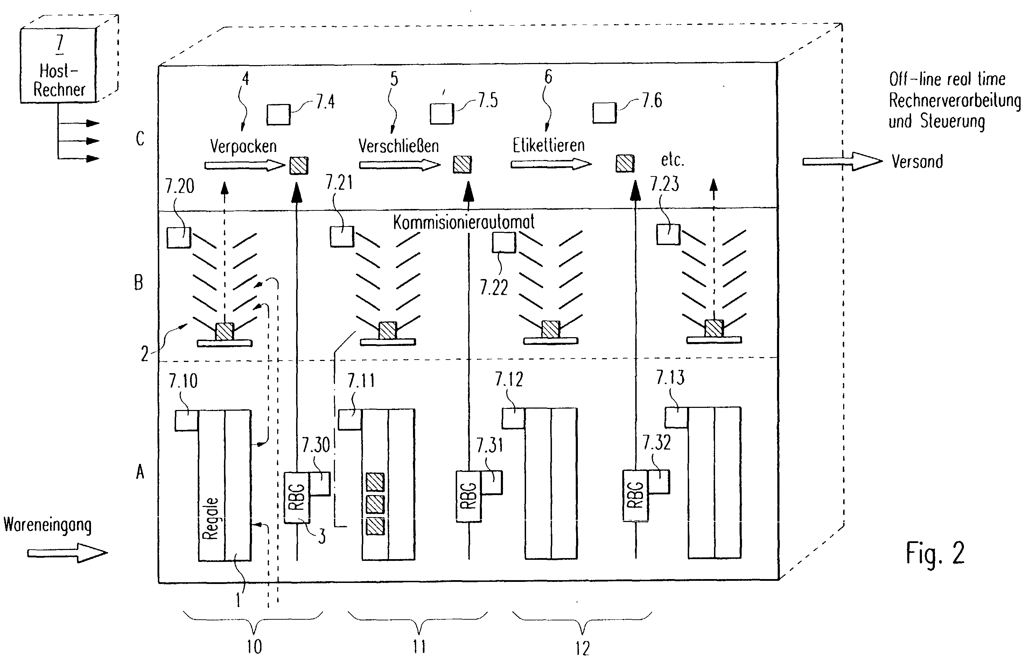

Erfindungsgemäß sind diese Einheiten räumlich äußerst eng zueinander angeordnet, vorzugsweise übereinander angeordnet. Dies wird anhand Fig. 2 näher erläutert. Oberhalb eines Hochregallagers 1 ist eine Kommissioniervorrichtung 2 angeordnet, die schematisch als solche vom Schachttyp angedeutet ist, jedoch auch jede andere grundsätzlich bekannte Bauart haben kann. Ein Sammel- bzw. Verteilgerät als Bediengerät ist sowohl dem Hochregallager 1 als auch der Kommissioniervorrichtung 2 zugeordnet und hat beispielsweise die Bauart eines Regalbediengerätes 3. Mittels des Regalbediengerätes 3 können die vom Wareneingang zugeführten Artikel sowohl in das Hochregallager 1 als auch direkt in die Kommissioniervorrichtung 2 eingegeben werden. Mittels des gleichen Regalbediengerätes 3 können die Artikel auch aus dem Hochregallager 1 entnommen und der Kommissioniervorrichtung 2 zugeführt werden.

Das Regalbediengerät 3 muß von seiner Bauart her lediglich in der Lage sein, die genannten Handhabungen durchzuführen. Das einzige Regalbediengerät 3 kann daher ein Kombinationsgerät sein, dessen eine Teile das Hochregallager 1 und dessen andere Teile die Kommissioniervorrichtung 2 bedienen.

Ferner ist dieser Anordnung aus Hochregallager 1, Kommissioniervorrichtung 2 und Regalbediengerät 3 eine Verpackungseinrichtung 4 zugeordnet. Diese erhält die mittels der Kommissioniervorrichtung 2 kommissionierten Artikel zur Verpackung. Dabei ist es zweckmäßig, das Regalbediengerät 3 ferner so auszubilden, daß es Artikel auch direkt vom Wareneingang oder dem Hochregallager 1 der Verpackungsvorrichtung 4 zuführen kann. Hierdurch kann unter Umständen viel Zeit gewonnen werden. Nach dem Verpacken erfolgt ein Verschließen in einer Verschließeinrichtung 5, ein anschließendes Etikettieren in einer Etikettiereinrichtung 6 und schließlich der Versand.

Fig. 2 zeigt auch, daß mehrere solcher Anordnungen 10, 11, 12 aus Hochregallager 1, Kommissioniervorrichtung 2 und Regalbediengerät 3 eng benachbart zueinander angeordnet sein können und dabei sogar parallel auf eine einzige Verpackungsvorrichtung 4 arbeiten können. Die Anordnung kann dabei auch so sein, daß ein Regalbediengerät zwei Hochregallager und zugehörige Kommissioniervorrichtungen bedienen kann, bzw. so sein, daß zwei Regalbediengeräte Zugriff zu einem Hochregallager und einer Kommissioniervorrichtung besitzen. Selbstverständlich, wenn auch nicht dargestellt, können Verpackungsvorrichtungen einzelnen Anordnungen 10, 11, 12 oder einer bestimmten Anzahl solcher Anordnungen getrennt zugeordnet sein.

Es kann zweckmäßig sein (nicht im einzelnen dargestellt), zusätzlich auch die händische Zufuhr einzelner Artikel zu ermöglichen, und zwar an der Verpackungsvorrichtung 4 (direkt in den Versandkarton) und/oder auch der Kommissioniervorrichtung 2 (in einen eigenen Schacht oder dergleichen).

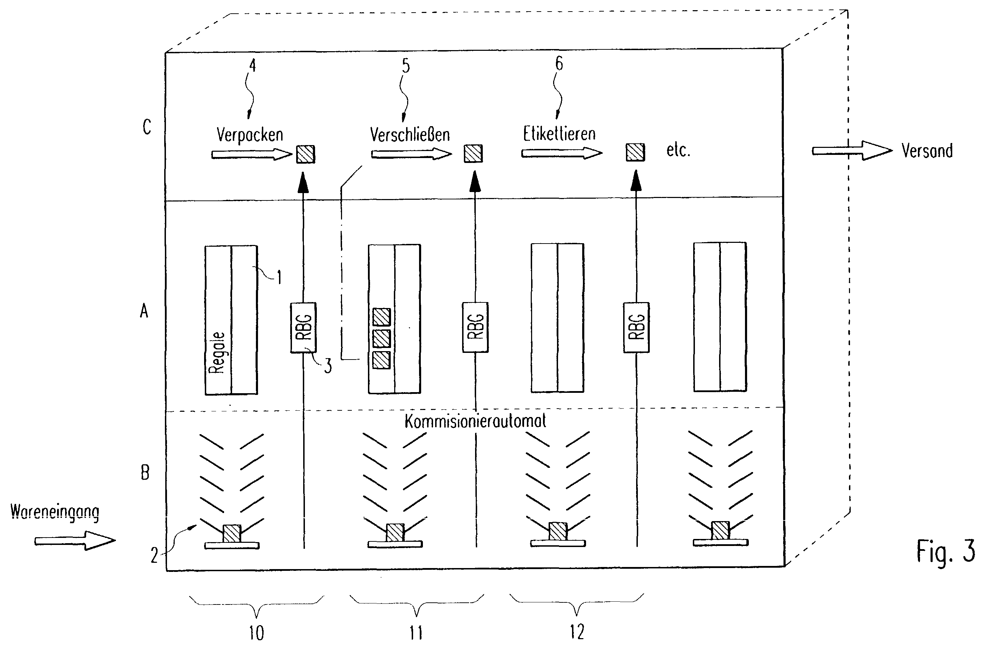

Fig. 2 zeigt dabei eine Anordnung, bei der die Kommissioniervorrichtung über dem Hochregallager 1 angeordnet ist. Die Anordnung kann jedoch auch umgekehrt sein, wie in Fig. 3 gezeigt.

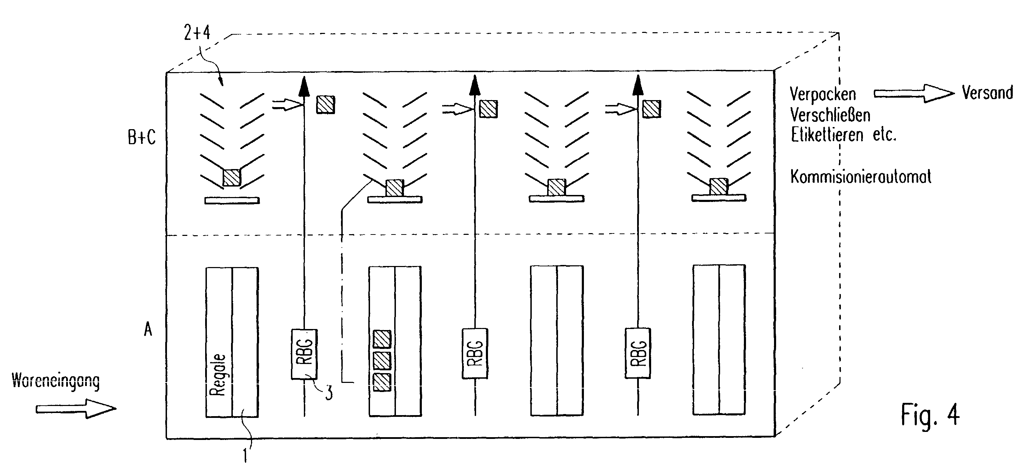

Schließlich ist es möglich, vgl. Fig. 4, eine Kommissioniervorrichtung einer Bauart zu verwenden, bei der bei der Kommissionierung sogleich zumindest das Verpacken erfolgt.

Der alle Vorgänge steuernde Zentral- oder Host-Rechner 7 ist in Fig. 1 und Fig. 2 dargestellt. Er empfängt Ist-Informationen von den verschiedenen Meßstraßen und dem Wareneingang sowie vom Versand. Er empfängt ferner die Kundenbestellungen und veranlaßt die richtige Arbeit der Kommissioniervorrichtung, des Regalbediengerätes, der Verpackungsvorrichtung etc.. Er veranlaßt auch die rechtzeitige Nachbestellung von Artikeln.

Darüberhinaus veranlaßt er auch die Steuerung des Regalbediengerätes 3 der Anordnung der vorliegenden Erfindung derart, daß je nach den Ist-Informationen und den Kundenbestellungen das Regalbediengerät 3 zur entsprechenden Versorgung der Kommissioniervorrichtung 2 veranlaßt wird, und zwar ausgehend vom Hochregallager oder direkt vom Wareneingang. Er veranlaßt auch die Umspeicherung von Artikeln aus dem Hochregallager zur Kommissioniervorrichtung und schließlich gegebenenfalls auch die Versorgung der Verpackungseinrichtung 4 auf direktem Wege. Dies erfolgt zweckmäßigerweise durch Ansteuern von jeweiligen Slave-Rechnem, die einem Regalbediengerät, einem Hochregallager, einer Kommissioniervorrichtung etc. jeweils zugeordnet sind und entsprechend programmiert sind, die Befehle vom Host-Rechner auszuführen. Hierdurch werden Wartung und Reparaturen, Ertweiterungen und Ersatz wesentlich vereinfacht. Gegebenenfalls ist lediglich die Schnittstelle zwischen Host- und Slave-Rechner anzupassen. Kontrolldaten von den Meßstrassen werden zweckmäßigerweise den Slave-Rechnern zur Verfügung gestellt. Selbstverständlich kann die Steuerung aber auch mittels nur eines einzigen zentralen Rechners erfolgen. Dies ist in Fig. 2 im einzelnen dargestellt:

Dem Hochregallager 1 der Anordnung 10 ist ein Slave-Rechner 7.10, dem der Anordnung 11 ein Slave-Rechner 7.11 u.s.w. zugeordnet. Der Kommissioniervorrichtung 2 der Anordnung 10 ist ein Slave-Rechner 7.20, dem der Anordnung 11 ein Slave-Rechner 7.21 u.s.w. zugeordnet. Dem Regalbediengerät 3 der Anordnung 10 ist ein Slave-Rechner 7.30, dem der Anordnung 11 ein Slave-Rechner 7.31 u.s.w. zugeordnet. Der Verpackungsvorrichtung 4 ist ein Slave-Rechner 7.4, der Verschließvorrichtung 5 ein Slave-Rechner 7.5, der Etikettiervorrichtung 6 ein Slave-Rechner 7.6 etc. zugeordnet. Die einzelnen Slave-Rechner 7.10, ... sind über jeweilige Schnittstellen und Busleitungen mit dem einzigen zentralen Host-Rechner 7 verbunden und werden von diesem angesteuert und überwacht.

Mittels der Erfindung ist ein weitestgehend vollautomatischer und daher personalfreier Kommissioniervorgang möglich, da alle Eventualitäten auf kürzestem Wege rechnergesteuert erledigt werden können. Dies schützt vor Schwund durch Diebstahl, spart Energie, da nur wenig Beleuchtung erforderlich ist und erlaubt eine den Artikeln zuträgliche Klimatisierung (Heizung und/oder Kühlung), ohne auf dauernd beschäftigtes Personal Rücksicht nehmen zu müssen.

Für die Realisierung können Lager 1, Kommissioniervorrichtungen 2 und Regalbediengeräte 3 an sich bekannter Bauart insoweit verwendet werden, als sie zueinander kompatibel im Sinne der vorliegenden Erfindung ausgebildet sind, also von einem einzigen Regalbediengerät auch bedient werden können. Die Kommissioniervorrichtung 2 muß dabei nicht notwendigerweise ein Kommissionierautomat sein, lediglich die automatische Beschickung (mittels des Regalbediengerätes 3) ist wesentlich.

Zusammenfassend wird durch die Erfindung die vom Kunden erwünschte Terminlieferung weitestgehend sichergestellt bei sehr kurzen Verweilzeiten der jeweiligen Artikel und damit jeweiligem Platzbedarf.

## Patentansprüche

1. Anordnung für die Kommissionierung von Artikeln, mit einem Lager und einer Kommissioniervorrichtung, die räumlich eng benachbart sind und durch ein einziges Bediengerät bedienbar sind, **dadurch gekennzeichnet, dass**:
- das Lager (1) zum Speichern von aus nacheinander einem Wareneingang zugeführten Gebinden vereinzelten Artikeln, und die Kommissioniervorrichtung (2) zur Aufnahme einzelner bestimmter Artikel in Pufferspeicherbereiche und zur gesteuerten Zusammenstellung von Kommissionen aus bestimmten Artikeln durch deren Entnahme aus den jeweiligen Pufferspeicherbereichen ausgebildet ist,
- ein Rechner (7) vorgesehen ist, der ausgehend zumindest von den zu bildenden Kommissionen und von den im Lager gespeicherten Artikeln deren Entnahme aus dem Lager und Übergabe in die Kommissioniervorrichtung steuert sowie die kommissionsgerechte Entnahme aus der Kommissioniervorrichtung steuert und der ausgehend vom Lagerbestand und den dem Wareneingang zugeführten Gebinden die Einspeicherung der vereinzelten Artikel in das Lager steuert, und
- das Bediengerät (3)
zum Einspeichern vereinzelter Artikel in das Lager (1),
zum Entnehmen gelagerter Artikel aus dem Lager (1) und deren Übergabe an die Kommissioniervorrichtung (2) sowie
zum gegebenenfalls direkten Übergeben vereinzelter Artikel an die Kommissioniervorrichtung (2) an dem Lager (1) vorbei vorgesehen ist.

2. Anordnung nach Anspruch 1,
**dadurch gekennzeichnet,**
**daß** Lager (1) und Kommissioniervorrichtung (2) übereinander angeordnet sind.

3. Anordnung nach Anspruch 1 oder 2
**dadurch gekennzeichnet,**
**daß** der Kommissioniervorrichtung (2) eine Verpackungseinrichtung (4) räumlich eng benachbart zugeordnet ist.

4. Anordnung nach Anspruch 3,
**dadurch gekennzeichnet,**
**daß** das Bediengerät (3) vereinzelte Artikel oder komplette Gebinde direkt, an Kommissioniervorrichtung (2) und Lager (1) vorbei, der Verpackungsvorrichtung (4) zuführen kann.

5. Anordnung nach Anspruch 3 oder 4,
**dadurch gekennzeichnet,**
**daß** eine Verschließvorrichtung (5), eine Etikettiervorrichtung (6) und dergleichen versandspezifische Vorrichtungen der Verpackungsvorrichtung (4) räumlich eng benachbart zugeordnet sind.

6. Anordnung nach einem der Ansprüche 3 bis 5,
**dadurch gekennzeichnet,**
**daß** der Rechner (7) auch die Verpackungsvorrichtung (4), gegebenenfalls die Verschließvorrichtung (5), die Etikettiervorrichtung (6) usw. steuert.

7. Anordnung nach einem der Ansprüche 3 bis 6,
**dadurch gekennzeichnet,**
**daß** eine einzige Verpackungsvorrichtung (4) mehreren Anordnungen (10, 11, 12) aus Lager (1), Kommissioniervorrichtung (2) und Bediengerät (3) gemeinsam zugeordnet ist.

8. Anordnung nach einem der Ansprüche 3 bis 7,
**dadurch gekennzeichnet,**
**daß** die Verpackungsvorrichtung (4) der Kommissioniervorrichtung (2) so zugeordnet ist, daß die Kommissioniervorrichtung (2) gesteuert direkt in einen von der Verpackungsvorrichtung (4) bereitgestellten aufgerichteten Versandkarton kommissioniert.

9. Anordnung nach einem der Ansprüche 1 bis 8,
**dadurch gekennzeichnet,**
**daß** Kommissioniervorrichtung (2) und/oder Verpackungsvorrichtung (4) so ausgebildet sind, daß im Bedarfsfall zusätzlich auch händisch einzelne Artikel zugeführt werden können.

10. Anordnung nach einem der Ansprüche 1 bis 9,
**dadurch gekennzeichnet,**
**daß** ein einziges Bediengerät (3) benachbarten Anordnungen aus Lager (1) und Kommissioniervorrichtung (2) zugeordnet sein kann bzw. zwei Bediengeräte (3) gleichzeitig eine Anordnung aus Lager (1), Kommissioniervorrichtung (2) parallel bedienen können.

11. Anordnung nach einem der Ansprüche 1 bis 10,
**dadurch gekennzeichnet,**
**daß** dem Lager (1), der Kommissioniervorrichtung (2), dem Bediengerät (3), gegebenenfalls der Verpackungsvorrichtung (4) etc. jeweils ein Slave-Rechner (7.10...; 7.20...; 7.30...; 7.4; ...) zugeordnet ist und alle Slave-Rechner (7.10...; 7.20...; 7.30...; 7.4; ...) von einem gemeinsamen zentralen Host-Rechner (7) gesteuert sind.

## Claims

1. Arrangement for picking articles, comprising a store and a picking device, which are closely adjacent and are operable by a single operating device, **characterised in that**
- the store (1) is formed for storing articles singled out from packing drums supplied consecutively to a goods inlet and the picking device (2) is formed for receiving specified individual articles in buffer storage regions and for the controlled assembly of orders consisting of specified articles by their removal from the respective buffer storage regions
- a computer (7) is provided, which, at least on the basis of the orders to be made up and of the articles stored in the store, controls their removal from the store and transfer to the picking device, as well as controlling removal from the picking device according to the order and the store and transfer to the picking device and controlling, on the basis of the stock and the packing drums fed to the goods inlet, the feeding in of the isolated articles into the store, and
- the operating device (3) is provided for feeding isolated articles into the store (1), for removing stored articles from the store (1) and their transfer to the picking device (2), and for the optionally direct transfer of isolated articles to the picking device (2) past the store (1).

2. Arrangement according to claim 1, **characterised in that** the store (1) and picking device (2) are disposed one above the other.

3. Arrangement according to claim 1 or 2, **characterised in that** the packing device (4) is associated closely in space with the picking device (2).

4. Arrangement according to claim 3, **characterised in that** the operating device (3) can supply isolated articles or complete packing drums direct to the packing device (4), past the picking device (2) and the store (1).

5. Arrangement according to claim 3 or 4, **characterised in that** a closing device (5), a labelling device (6) and the similar devices concerned with dispatch are associated closely in space with the packing device (4).

6. Arrangement according to one of claims 3 to 5, **characterised in that** the computer (7) also controls the packing device (4), optionally the closing device (5), the labelling device (6) etc..

7. Arrangement according to one of claims 3 to 6, **characterised in that** a single packing device (4) is associated with a plurality of arrangements (10, 11, 12) together, consisting of the store (1), picking device (2) and operating device (3).

8. Arrangement according to one of claims 3 to 7, **characterised in that** the packing device (4) is so associated with the picking device (2) that the picking device (2) picks direct into a cardboard box assembled and made available by the packing device (4).

9. Arrangement according to one of claims 1 to 8, **characterised in that** the picking device (2) and/or packing device (4) are so formed that if necessary, in addition, individual articles can be added by hand.

10. Arrangement according to one of claims 1 to 9, **characterised in that** a single operating device (3) can be associated with adjacent arrangements consisting of store (1) and picking device (2) or two operating devices (3) simultaneously can operate in parallel an arrangement consisting of store (1) and picking device (2).

11. Arrangement according to one of claims 1 to 10, **characterised in that** a respective slave computer (7.10...; 7.20...; 7.30...; 7.4;...) is associated with the store (1), the picking device (2), the operating device (3), and optionally the packing device (4) etc., and all slave computers (7.10...; 7.20...; 7.30...; 7.4;...) are controlled by a common, central host computer (7).

## Revendications

1. Agencement pour la préparation de commandes d'articles, comprenant un magasin et un dispositif de préparation de commandes, qui sont étroitement voisins l'un de l'autre sur le plan de leur implantation dans l'espace, et qui peuvent être desservis par un appareil unique de desserte, **caractérisé**
- **en ce que** le magasin (1) est conçu pour le stockage d'articles individuels séparés d'ensembles d'articles amenés successivement à une entrée de marchandises, et le dispositif de préparation de commandes (2) est conçu pour recevoir des articles individuels déterminés dans des zones de stockage tampon et pour former par regroupement, en étant piloté, des commandes constituées d'articles déterminés, par prélèvement de ces derniers dans les zones de stockage tampon respectives,
- **en ce qu'**il est prévu un calculateur (7) qui, à partir au moins des commandes à former et des articles stockés dans le magasin, pilote le prélèvement de ces derniers dans le magasin et leur transfert dans le dispositif de préparation de commandes, et qui pilote également le prélèvement, conforme aux commandes, dans le dispositif de préparation de commandes, et qui finalement, à partir du stock disponible en magasin et des ensembles d'articles amenés à l'entrée de marchandises, pilote la mise en stock des articles individuels séparés dans le magasin, et
- **en ce que** l'appareil de desserte (3) est prévu
pour la mise en stock dans le magasin (1), d'articles individuels séparés,
pour le prélèvement dans le magasin (1), d'articles stockés et leur transfert au dispositif de préparation de commandes (2), ainsi que
pour, le cas échéant, le transfert direct d'articles individuels séparés au dispositif de préparation de commandes (2), en ignorant le magasin (1).

2. Agencement selon la revendication 1, **caractérisé en ce que** le magasin (1) et le dispositif de préparation de commandes (2) sont disposés l'un au-dessus de l'autre.

3. Agencement selon la revendication 1 ou 2, **caractérisé en ce qu'**au dispositif de préparation de commandes (2) est associé, en en étant étroitement voisin en ce qui concerne l'implantation dans l'espace, un dispositif d'emballage (4).

4. Agencement selon la revendication 3, **caractérisé en ce que** l'appareil de desserte (3) peut amener des articles individuels séparés ou des ensembles d'articles complets, directement au dispositif d'emballage (4), en ignorant le dispositif de préparation de commandes (2) et le magasin (1).

5. Agencement selon la revendication 3 ou 4, **caractérisé en ce qu'**un dispositif de fermeture (5), un dispositif d'étiquetage (6) et d'autres dispositifs similaires spécifiques pour l'expédition, sont associés au dispositif d'emballage (4), en en étant étroitement voisins en ce qui concerne l'implantation dans l'espace.

6. Agencement selon l'une des revendications 3 à 5, **caractérisé en ce que** le calculateur (7) pilote également le dispositif d'emballage (4), le cas échéant, le dispositif de fermeture (5), le dispositif d'étiquetage (6) et ainsi de suite.

7. Agencement selon l'une des revendications 3 à 6, **caractérisé en ce qu'**un seul dispositif d'emballage (4) est associé, de manière commune, à plusieurs agencements (10, 11, 12) constitués par le magasin (1), le dispositif de préparation de commandes (2) et l'appareil de desserte (3).

8. Agencement selon l'une des revendications 3 à 7, **caractérisé en ce que** le dispositif d'emballage (4) est associé au dispositif de préparation de commandes (2) de façon telle, que le dispositif de préparation de commandes (2), en étant piloté, place les articles conformément aux commandes à réaliser, directement dans un carton d'expédition monté, mis à disposition par le dispositif d'emballage (4).

9. Agencement selon l'une des revendications 1 à 8, **caractérisé en ce que** le dispositif de préparation de commandes (2) et/ou le dispositif d'emballage (4) sont conçus de façon telle, qu'en cas de besoin, il soit également possible d'amener, en supplément, des articles individuels, manuellement.

10. Agencement selon l'une des revendications 1 à 9, **caractérisé en ce qu'**un seul appareil de desserte (3) peut être associé à des agencements voisins, constitués d'un magasin (1) et d'un dispositif de préparation de commandes (2), ou bien deux appareils de desserte (3) peuvent desservir simultanément en parallèle un agencement constitué d'un magasin (1) et d'un dispositif de préparation de commandes (2).

11. Agencement selon l'une des revendications 1 à 10, **caractérisé en ce qu'**au magasin (1), au dispositif de préparation de commandes (2), à l'appareil de desserte (3), le cas échéant au dispositif d'emballage (4), etc., est chaque fois associé un calculateur esclave (7.10... ; 7.20... ; 7.30... ; 7.4;...), et tous les calculateurs esclaves (7.10... ; 7.20... ; 7.30... ; 7.4;...) sont pilotés par un calculateur central maître (7) commun.
